# EUROPEAN PATENT APPLICATION

(11) **EP 1 770 399 A1**
(43) Date of publication of application: **04.04.2007**
(21) Application number: 05811276.4
(22) Date of filing: 01.12.2005
(51) Int. Cl.: G01N 35/02, G01N 1/00

(54) **INSPECTION INSTRUMENT**

(30) Priority: 03.12.2004 JP 2004351479
(71) Applicant: Arkray, Inc., Kyoto-shi, Kyoto 601-8045 (JP)
(72) Inventor: SAKAMOTO, Hisashi c/o ARKRAY, INC.,, Kyoto-shi, Kyoto 601-8045 (JP); FUJII, Shigeo c/o TOEI TECHNICA CO., LTD., Nara-shi, Nara 631-0011 (JP)
(74) Representative: Neath, Susannah Mairi
(86) International application number: PCT/JP2005/022112
(87) International publication number: WO 2006/059694

(57) **Abstract**

A testing tool capable of reading out information recorded in an information recording section accurately by optical means is provided. The testing tool of the present invention is for testing a component in a liquid sample, and includes an information recording section in which information is recorded and the information is readable optically. The information recording section has water repellency. Since the information recording section has water repellency, adhesion of the liquid sample to the information recording section is suppressed, and the recorded information can be read out accurately, for example by optical means in an analyzer. The form of the testing tool is not limited particularly, and for example, it may be a container, a test strip and the like.

## Description

### Technical Field

The present invention relates to a testing tool. More specifically, the present invention relates to a testing tool in which various types of information are recorded.

### Background Art

Well-known means for analyzing a target biogenic component in a liquid sample such as urine or blood includes a solution method and a dry method. The solution method refers to a method in which a liquid sample is added to a reagent solution containing enzymes, a chromogenic reaction substrate and the like and the color tone of a chromogenic reaction or signals generated in accordance with the amount of the target component in the liquid sample are measured with an analyzer. The dry method refers to a method in which a reagent capable of reacting with a target component is made solid-phased by chemically fixing, adsorption or impregnation to a surface of a base or in a porous matrix, with which a liquid sample is brought into contact, and the color tone of a chromogenic reaction or signals generated are measured.

In the case where the component in the liquid sample is analyzed by the solution method, a liquid sample taken is often placed in a container (e.g., a cuvette) as a testing tool, which is carried to a central laboratory of a hospital or an inspection center outside of a hospital for test. In this case, in order to avoid mix-ups between liquid samples for different patients, an outer wall of the cuvette generally is provided with an information recording section in which patient's information is recorded. This information recording section is formed for example by directly printing a bar code on the outer wall of the cuvette or by attaching a label with a bar code printed thereon beforehand to the outer wall of the cuvette.

In the case where the component in the liquid sample is analyzed by the dry method, a testing tool including a base on which a reagent pad is formed (a so-called test strip) is used. In this case also, in order to avoid mix-ups between testing tools as well as between patients, an information recording section for recording information may be provided at a portion other than the reagent pad on the base. This information recording section is formed for example by directly printing a bar code on the base or by attaching a label with a bar code printed thereon beforehand to the base.

Then, the information recorded in the information recording section is read out mechanically by optical means such as a bar code reader, is classified and the testing tool is conveyed to the analyzer exclusively used for analysis of the biogenic component.
Patent document 1: JP S58(1983)-45565 A

### Disclosure of Invention

### Problem to be Solved by the Invention

When a component in a liquid sample is analyzed, however, droplets may adhere to the information recording section, which may result in the diffused reflection of light, the coloring of the information recording section or the like. Thus, when the information in the information recording section is read out by optical means such as a bar code reader, there is a problem that the recorded information cannot be read out accurately.

Therefore, it is an object of the present invention to provide a testing tool capable of reading information recorded in an information recording section more accurately.

### Means for Solving Problem

In order to achieve the above-stated object, a testing tool of the present invention is for testing a component in a liquid sample, and the testing tool includes an information recording section in which information is recorded and the information is readable optically. The information recording section has water repellency.

### Effects of the Invention

According to the present invention, since the information recording section has water repellency, the adhesion of a liquid sample to the information recording section can be suppressed. Thereby, the diffused reflection of light, coloring and the like due to the adhesion of droplets to the information recording section can be prevented. As a result, the recorded information can be read out easily and accurately.

### Brief Description of Drawings

[Fig. 1] Fig. 1 is a perspective view of an exemplary testing tool of the present invention.
[Fig. 2] Fig. 2 is a perspective view of another exemplary testing tool of the present invention.
[Fig. 3] Fig. 3 is a perspective view of still another exemplary testing tool of the present invention.

### Explanations of reference numerals

- 1:: cuvette
- 2:: bar code
- 3:: information recording section (water repellency treated region)
- 4:: base
- 5:: reagent pad
- 6:: reagent pad
- 7:: information recording section (in the form of bar code)
- 8:: information recording section (in the form of text)
- 9:: water repellency treated region

### Description of the Invention

"Water repellency" generally refers to having the property of repelling water. Here, for the purpose of the present invention, "the information recording section having water repellency" refers to the state in which the adhesion of droplets is suppressed to a degree such that by virtue of the above-stated water repellency, optical means can read out the information recorded in the information recording section more accurately without any reading errors. In the present invention, although the information recording section refers to a region where information is recorded, the water repellency may be imparted to the information recording portion only where the information is recorded, the periphery of the information recording portion or the periphery of the information recording section as a whole. Moreover, water repellency may be imparted to a region surrounding the information recording section as well.

According to the present invention, the above-stated water repellency of the information recording section may be imparted for example by conducting a water repellency treatment of the information recording section with a water repellency agent (Embodiment 1) and by recording information in the information recording section using a water repellency agent (Embodiment 2).

### (Embodiment 1)

In Embodiment 1 of the present invention, a water repellency agent used for the above-stated water repellency treatment is not limited particularly, as long as the portion subjected to the water repellency treatment has water repellency and information recorded in the information recording section is readable optically. For example, a conventionally well-known water repellency agent, a hydrophobic resin dissolved or dispersed in an organic solvent and the like may be used. The hydrophobic resin may include a polyurethane based resin, a polyacrylic based resin, a polyester based resin, a polyamide resin, a polyvinyl chloride based resin, a polystyrene based resin, a fluorine based resin, paraffin wax and other modified rubber, for example. The organic solvent may include toluene, xylene, hexane, cyclohexanone and dimethyl sulfoxide (DMSO), for example.

The above-stated water repellency treatment may be conducted by, for example, spraying and applying the above-stated water repellency agent to the above-stated information recording section by coating, printing or jet-printing, followed by drying and curing (e.g., UV curing, photo-setting).
As described above, the above-stated water repellency treatment may be conducted not only at an information recording portion in the above-stated information recording section or the information recording section as a whole but also at a peripheral region including the information recording section.
In the present invention, the water repellency treatment preferably is conducted at the information recording section as a whole, whereby the adhesion of droplets can be suppressed also at a portion where the information is not printed or attached in the information recording section. Thus, the information recorded in the information recording section can be read out still more accurately.

The above-stated information recording section is not limited particularly, as long as the recorded information can be read out by optical means. A method for forming the above-stated information recording section is not limited particularly, and it may be formed by printing, laser, sandblasting, stamping or labeling, for example. The composition of ink used for recording information by the above-stated printing and stamping is not limited particularly, and the ink may be hydrophilic or hydrophobic. The above-stated labeling may be conducted by attaching a label on which information has been printed in the form of bar code, text or the like or by attaching a tape, for example. The color of the above-stated ink, label or the like is not limited particularly, and it may be an achromatic color such as black, white or gray or a chromatic color such as yellow, brown, red, purple, blue or green. Further, it may be a single color or a plurality of colors or the intensity of a color may be changed. Among others, black is used preferably. The display format of the information in the information recording section is not limited particularly, and it may be displayed using bar code, symbols, text or the like, only one type of which may be used or two or more types of which may be used together for display.

### (Embodiment 2)

In Embodiment 2 of the present invention, a water repellency agent used for recording information in the above-stated information recording section may include hydrophobic ink in which an ink base such as pigment or dye contains a hydrophobic resin, for example. As the hydrophobic resin, the resins as stated above can be used, and in addition to that, conventionally well-known resins that are used for a binder of ink, for example, may be used. A solvent in which such a hydrophobic resin is dissolved or dispersed can be selected appropriately in accordance with the type of the above-stated hydrophobic resin or the like, and toluene, xylene, hexane, cyclohexanone, DMSO or the like may be available. The above-stated hydrophobic ink optionally may contain a coloring agent, an inorganic or organic filler, a water repellency agent such as a fluorine based resin or silicon, a surface active agent; a viscosity modifier, a UV curing agent or the like. The color of the above-stated ink is similar to the above, and the display format of the information in the information recording section is not limited particularly in a similar manner to the above. For example, in the case where the display format of the information recording section is in the form of bar code, black ink is used preferably. A method for forming the above-stated information recording section is not limited particularly in a similar manner to the above. In the case where the information is recorded by printing with water repellency ink, the thickness of the portion printed with the above-stated ink preferably ranges from 5 to 10 µm, for example. Such a range of thickness further can avoid the adhesion of droplets to the printing portion even when a liquid sample adheres to the portion where the printing is not conducted on the base. Thus, the information recorded in the information recording section can be read out more accurately.

In the present invention, the information written in the above-stated information recording section may include patient's information and product information, for example. The above-stated patient's information may include a serial number (e.g., a serial number assigned to a patient in a medical facility (patient ID)), a name, address, age, sex, a type of health insurance owned or applied and personal medical history, for example. The above-stated product information may include items to be measured, the number of the items, the order in which items are arranged, measurement conditions, lot information, the expiry period, a calibration curve, the shipping destination, a provider and information for identifying the location of a reagent and front/rear of the testing tool, for example. Such information is read out optically by optical means such as a bar code reader built in an analyzer, for example, and the measurement results are output together with such information, whereby mix-ups of the test samples and the measurement results can be prevented. Concerning such information, one type of which may be written, or a combination of a plurality of types of information may be written. Alternatively, all of such information may be coded, which may be written as a bar code.

In the present invention, the form of the testing tool is not limited particularly. For example, it may be in the form of a container in which the above-state liquid sample is placed, or in the form of a test strip including a base on which a reagent pad is formed. In the case where the testing tool is in the form of a container, the above-stated information recording section preferably is formed on an outer wall face of the container, and the form of the container may be a cuvette, for example. The material of the container is not limited particularly, and it may be formed of plastic, glass, quartz or the like.

In the present invention, in the case where the testing tool is a test strip, the above-stated information recording section preferably is formed at a region on the base where the reagent pad is not formed. In the case where a test strip includes a plurality of reagent pads formed therein, the information recording section may be formed between these reagent pads. The face on which the information recording section is formed may be the same face as the face of the base on which a reagent pad is formed or the opposite face.
The material of the base is not limited particularly, and it may be formed of resin, metal, glass, paper or the like. Among others, a thermoplastic resin such as polyethylene terephthalate, paper, biodegradable plastic and the like are preferable. The base may be transparent or opaque, and the color thereof is not limited particularly and may be any one of white, gray, block and chromatic colors. The size of the base is not limited particularly, and it can be determined appropriately in accordance with the test items, the specifications of the analyzer used and the like. The size, for example, may be 50 to 150 mm in length, 2 to 10 mm in width and 0.1 to 1.0 mm in thickness. Each reagent pad can be formed by attaching a pad on the above-stated base, the pad being impregnated with a predetermined reagent in accordance with the test item. The material of the pad may include filter paper, glass fiber filter paper, knitted fabric, woven fabric, nonwoven fabric, membrane filter and porous resin sheet, for example. The shape of the reagent pads is not limited particularly, and it may be a square, a rectangular, a circle, an oval and the like. The size of the reagent pads is not limited particularly, and in the case where the shape is a square, vertical and horizontal dimensions both may be 2 to 10 mm, and the thickness may be 0.05 to 1.0 mm. The number of the reagent pads may be increased and decreased in accordance with the test items. The pitch of the reagent pads arranged is not limited particularly, and it may be 1. 0 to 100 mm, for example. After supporting a reagent with the pad material, the reagent pad may be shaped into a predetermined shape. Alternatively, after shaping the above-stated pad material into a predetermined shape, the reagent may be supported therewith. The reagent can be supported by immersing a pad material in a reagent solution, followed by drying. The pad may be placed on the base using an adhesive or a tackiness agent, for example. The above-stated adhesive or tackiness agent may include polyurethane based, acrylic based, vinyl chloride based, epoxy based, nylon based, hot melt based, cyanoacrylate based or rubber based materials, for example. Instead of placing the reagent pad on the base using a pad, the reagent pad may be formed by directly impregnating the base with a reagent.

The uses of the testing tool of the present invention are not limited particularly, and it may be used for urinalysis, a biochemical test, a microorganism test, an immunological test, a genetic analysis, an environmental test, a test for an agricultural chemical, an allergen test or the like. Among others, the testing tool of the present invention preferably is used for urinalysis. In the case where the testing tool is in the form a test strip, test items for urinalysis may include glucose (GLU), protein (PRO), bilirubin (BIL), urobilinogen (URO), pH, occult blood (BLD), ketone bodies (KET), nitrite (NIT), leukocytes (LEU), S.G. (specific gravity), a color tone, ascorbic acid, a salt concentration, highly-sensitive protein, albumin, creatinine, Bence-Jones protein, hormones, physiologically active substances and the like. For example, when the testing tool accommodates a plurality of test items, at least one reagent pad corresponding to each test item may be formed.

The testing tool of the present invention preferably is used in an analyzer. There is no particularly limitation on the types of the analyzer, and the analyzer may be operated manually, semiautomatically, or automatically.

In the present invention, the liquid sample is not limited particularly, and may include an aqueous test sample that is used normally for a biochemical test, such as urine, blood, cerebrospinal fluid and saliva.

The following describes non-limiting examples of the present invention for explaining the present invention more specifically.

### Example 1

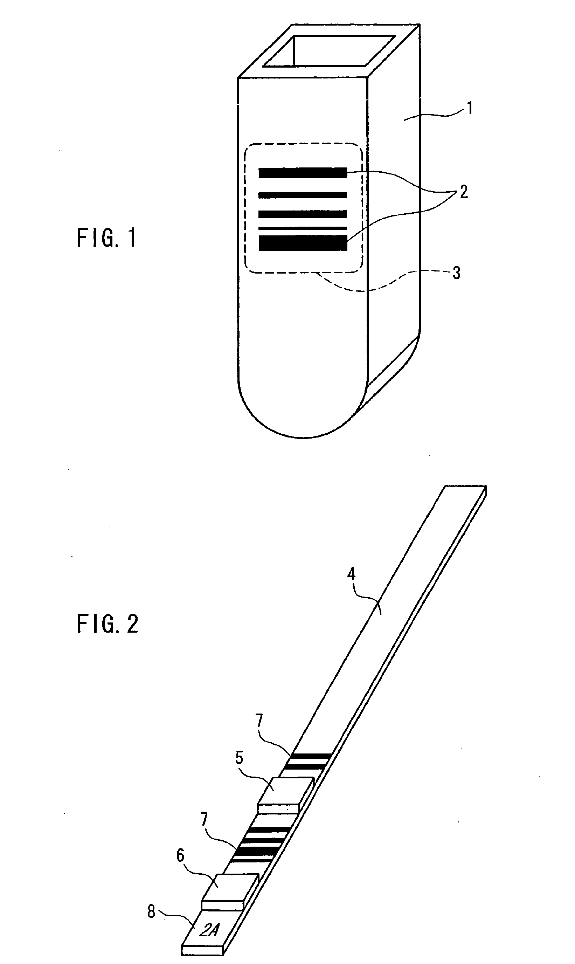

Fig. 1 is a perspective view of an exemplary cuvette-type testing tool. As illustrated in this drawing, an information recording section 3 was provided on an outer wall of a cuvette body 1 by printing a bar code 2 with hydrophilic ink, and a water repellency treatment was conducted by spraying a water repellency agent so as to cover a region of the bar code portion 2, followed by air-drying. In this drawing, the portion subjected to the water repellency treatment is shown by dotted lines 3. The above-stated water repellency agent was prepared by polymerizing 1.5 weight% of fluorine and 1.0 weight% of silicon oil and dissolving this polymer in 97.5% of cyclopentane. As Comparative Example 1, samples were prepared by the same process as for the testing tool of Fig. 1 except that the water repellency treatment was not conducted.

Ten pieces of the cuvette-type testing tools were prepared for those subjected and not subjected to the water repellency treatment, respectively. About 10 mL of urine was placed in these cuvettes, and colored urine (red, brown and blue) was made to adhere to the information recording sections on the surfaces of the respective cuvetts intentionally, and measurement was conducted using an automatic urine chemical analyzer (produced by Arkray, Inc., AJ-4270). Herein, IC code was stored in the bar code 2 for identifying a patient, and this information was read out automatically by a bar code reader built in the above-stated analyzer. The read-out results of the information associated with the colors of the colored urine are shown in the following Table 1. In Table 1, circles o denote "readable" and small crosses × denote "unreadable".

**[Table 1]**

| | Example 1 | | | Comparative Example 1 | | |
|---|---|---|---|---|---|---|
| | red urine | brown urine | blue urine | red urine | brown urine | blue urine |
| 1 | O | O | O | O | × | × |
| 2 | O | O | O | O | × | × |
| 3 | O | O | O | × | O | × |
| 4 | O | O | O | O | × | × |
| 5 | O | O | O | O | × | O |
| 6 | O | O | O | O | O | x |
| 7 | ○ | ○ | ○ | × | × | × |
| 8 | ○ | ○ | ○ | ○ | ○ | × |
| 9 | ○ | ○ | ○ | × | × | ○ |
| 10 | ○ | ○ | ○ | ○ | × | × |

As shown in Table 1, in the testing tools of Example 1, even when various colors of the colored urine was made to adhere, the urine was not supported on the bar codes because the information recording sections (bar codes) had water repellency, so that all of the information could be read out accurately. On the other hand, in the testing tools of Comparative Example 1, since the colored urine adhered to the bar codes with a relatively high frequency, the light emitted from the bar code reader was reflected diffusely at the surface of the adhering urine, resulting in frequent unreadable cases.

### Example 2

Fig. 2 is a perspective view of an exemplary test strip. As shown in this drawing, this testing tool includes reagent pads 5 and 6 made of filter paper and a base 4 made of white polyethylene terephthalate processed into a rectangular shape with a thickness of 0.3 mm. The reagent pads 5 and 6 are disposed on the base 4, and information recording sections 7 and 8 with information recorded therein are provided at a region of the base where the reagent pads 5 and 6 are not disposed.

The information recording section 7 (in the form of a bar code) and the information recording section 8 (in the form of text) were formed by screen-printing on the base 4 using S902 gray hydrophobic ink (Erie Scientific Company) containing Teflon®. As Comparative Example 2, testing tools were prepared having a configuration similar to that of Example 2 except that general hydrophilic ink was used instead of hydrophobic ink.

Five pieces of test strips were prepared for those using hydrophobic ink (Example 2) and using hydrophilic ink (Comparative Example 2), respectively. These test strips were immersed in brown-colored urine with a high intensity and then pulled up, and the presence or absence and the amount of the adhesion of the urine to the information recording sections 7 were observed visually. Then, the information recorded in the information recording sections 7 was read out optically by a bar code reader. These results are shown in the following Table 2.

**[Table 2]**

| | Example 2 | | Comparative Example 2 | |
|---|---|---|---|---|
| | Visual confirmation of adhesive urine | Reading by barcode reader | Visual confirmation of adhesive urine | Reading by barcode reader |
| 1 | non adhesion | readable | adhesion | misreading |
| 2 | non adhesion | readable | adhesion | misreading |
| 3 | non adhesion | readable | adhesion | misreading |
| 4 | non adhesion | readable | adhesion | misreading |
| 5 | non adhesion | readable | adhesion | misreading |

As shown in Table 2, in the test strips of Comparative Example 2, diffused reflection or absorption of the light emitted from the bar code reader occurred due to the adhesion of urine, or blurring occurred because printing was conducted using hydrophilic ink, thus causing misreading in all of the test strips. On the other hand, in the testing tools of Example 2 in which information was printed in the information recording sections with water repellency ink, urine hardly adhered to the information recording sections, and the adhesion amount, if any, was very small, and therefore the recorded information could be read out clearly and accurately by the bar code reader.

### Example 3

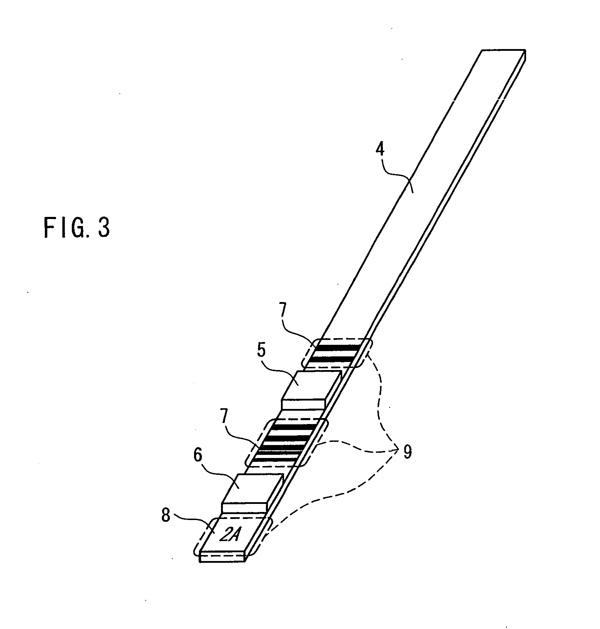

Fig. 3 is a perspective view showing a testing tool having a configuration similar to that of the test strip used in Example 2. In Fig. 3, the same reference numerals are assigned to the same portions as those in Fig. 2, and unless otherwise specified, it has a similar configuration and was manufactured in a similar manner. In Fig. 3, a reagent pad 5 is a test pad for glucose analysis including filter paper impregnated with glucose oxidase, peroxidase, 4-aminoantipyrine and 1-naphthol-3, 6-disulfonic acid disodium salt. A reagent pad 6 is a test pad for protein analysis including filter paper impregnated with Tetrabromophenol Blue (TBPB). In this example, hydrophilic ink similar to Example 1 was used to form the information recording sections 7 and 8, and a water repellency treatment was conducted to the information recording sections 7 and 8 by spraying a water repellency agent similar to that of Example 1 to the surfaces of the information recording sections 7 and 8 while narrowing the spraying nozzle so as to prevent the water repellency agent from adhering to the reagent pads 5 and 6, followed by air-drying. As Comparative Example 3, testing tools having a configuration similar to that of Example 3 except that the water repellency treatment was not conducted were prepared. Herein, in Fig. 3, the portion subjected to the water repellency treatment is shown by dotted lines 9.

Five pieces of test strips were prepared for those subjected to the water repellency treatment (Example 3) and not subject to the treatment (Comparative Example 3), respectively. These test strips were immersed in brown-colored urine with a high intensity and then pulled up, and the presence or absence and the amount of the adhesion of the urine to the information recording sections 7 were observed visually. Furthermore, the reflectance at the information recording sections 7 was measured by a spectroreflectometer. These results are shown in the following Table 3.

**[Table 3]**

| | Example 3 | | Comparative Example 3 | |
|---|---|---|---|---|
| | Visual confirmation of adhesive urine | Reflectance (%) | Visual confirmation of adhesive urine | Reflectance (%) |
| 1 | non adhesion | 5.4 | adhesion | 15.4 |
| 2 | non adhesion | 5.7 | adhesion | 18.3 |
| 3 | non adhesion | 5.5 | adhesion | 7.9 |
| 4 | non adhesion | 5.3 | adhesion | 23.6 |
| 5 | non adhesion | 5.8 | adhesion | 9.1 |

As shown in Table 3, since the information recording sections of the test strips of Example 3 had water repellency, the adhesion of urine was not observed on the information recording sections, and the reflectance measured from a plurality of test strips was constant, and the results of good reproducibility could be obtained. On the other hand, in the test strips of Comparative Example 3 that were not subjected to the water repellency treatment, urine remained on the information recording sections, thus causing the diffused reflection of the light. For that reason, the measurement results by the spectroreflectometer show higher reflectance than the present invention, and the reproducibility of the reflectance measured from the plurality of test strips also was considerably bad.

### Industrial Applicability

As described above, according to the testing tool of the present invention, since the information recording section has water repellency, the diffused reflection of light and coloring due to the adhesion of a liquid sample or the like can be prevented. Therefore, information recorded on the information recording section can be read out more accurately for example by optical means in a usual analyzer. Thus, it is expected that the use of the testing tool of the present invention will bring about various advantages such as automation, labor savings and enhancement of the reliability of the test.

## Claims

1. A testing tool for testing a component in a liquid sample, comprising an information recording section in which information is recorded and the information is readable optically,
wherein the information recording section has water repellency.

2. The testing tool according to claim 1, wherein the information recording section is water repellency treated using a water repellency agent.

3. The testing tool according to claim 2, wherein the water repellency agent comprises a resin selected from the group consisting of a polyurethane based resin, a polyacrylic based resin, a polyester based resin, a polyamide resin, a polyvinyl chloride based resin, a polystyrene based resin, a fluorine based resin, a silicon based resin and paraffin wax.

4. The testing tool according to claim 1, wherein in the information recording section the information is recorded with a water repellency agent.

5. The testing tool according to claim 4, wherein the water repellency agent is water repellency ink.

6. The testing tool according to claim 5, wherein the water repellency ink comprises a resin selected from the group consisting of a polyurethane based resin, a polyacrylic based resin, a polyester based resin, a polyamide resin, a polyvinyl chloride based resin, a polystyrene based resin, a fluorine based resin, a silicon based resin and paraffin wax.

7. The testing tool according to claim 5, wherein a display format of the information recording section is in the form of a bar code.

8. The testing tool according to claim 7,
wherein the information is recorded by printing with water repellency ink, and
a thickness of a portion where the information is printed ranges from 5 to 10 µm.

9. The testing tool according to claim 1 comprising a container in which the liquid sample is placed, wherein the information recording section is formed on an outer wall face of the container.

10. The testing tool according to claim 1 comprising a base and a reagent pad disposed on the base, wherein the information recording section is formed at a region on the base where the reagent pad is not disposed.

11. The testing tool according to claim 1, wherein the information recorded in the information recording section comprises at least one of patient's information and product information.

12. The testing tool according to claim 11, wherein the patient's information comprises information selected from the group consisting of a serial number, a name, address, age, sex, a type of health insurance and personal medical history of a patient.

13. The testing tool according to claim 11, wherein the product information comprises information selected from the group consisting of items to be measured, the number of the items, an order in which the items are arranged, measurement conditions, lot information, an expiry period, a calibration curve, a shipping destination, a provider and information for identifying a location of a reagent and front/rear of the testing tool.
